# EUROPÄISCHE PATENTSCHRIFT

(11) **EP 2 858 793 B1**
(45) Veröffentlichungstag und Bekanntmachung des Hinweises auf die Patenterteilung: **16.05.2018**
(21) Anmeldenummer: 13725572.5
(22) Anmeldetag: 24.05.2013
(51) Int. Cl.: B25J 15/08, B25J 15/00, B25J 11/00, B08B 9/42, B65G 47/90

(54) **GREIFERANORDNUNG**
GRIPPER
DISPOSITIF DE PRÉHENSION

(30) Priorität: 11.06.2012 DE 102012011367
(43) Veröffentlichungstag der Anmeldung: 15.04.2015
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2013/001534
(87) Internationale Veröffentlichungsnummer: WO 2013/185880

(56) Entgegenhaltungen:
- EP-A1- 0 577 569
- EP-A1- 1 854 589
- WO-A1-2009/135596
- DE-U1- 29 712 066
- US-A1- 2012 031 043

## Beschreibung

Die Erfindung bezieht sich auf eine Greiferanordnung gemäß Oberbegriff Patentanspruch 1 sowie auf ein Transportelement gemäß Oberbegriff Patentanspruch 12.

Bekannt ist ein Transporteur für becherartige Behälter mit einer Greiferanordnung (EP 1 854 589 A1). Die Greiferanordnung weist einen Greifer mit zwei gelenkig miteinander verbundenen Greiferarmen auf, die durch eine Spreizfeder gespreizt den jeweiligen Behälter an seinen Behälterinnenflächen halten. Durch ein relativ zu den Greiferarmen heb- und senkbares Rahmenelement, welches mit Rollen gegen einander abgewandte Außenseiten der Greiferarme einwirkt, können zur Freigabe des jeweiligen Behälters die gespreizten Greiferarme gegen die Wirkung der Spreizfeder aufeinander zu bewegt werden.

Bekannt ist weiterhin eine Greiferanordnung (DE 297 12 066 U1), mit Greifern zum Halten von Flaschen oder dergleichen Behältern an umlaufenden Transportelementen, beispielsweise von Transportsternen oder Behälterbehandlungsmaschinen. Die Greifer sind als passive Greifer ausgebildet, d.h. als zangenartige Greifer, die den jeweiligen Behälter mit ihren Greiferarmen durch Federkraft klemmend halten und bei denen die Übergabe bzw. das Einschieben und die Entnahme des jeweiligen Behälters an den Greifer bzw. von dem Greifer durch Auseinanderbewegen der Greiferarme gegen Federkraft erfolgt.

Ein gewisses Problem bei bekannten passiven Greifer besteht darin, dass ein Kornprorniss zwischen einer möglichst hohen Klemm- oder Haltekraft und einem möglichst weichen Einschieben und Entnehmen der Behälter in die bzw. aus den Greifern angestrebt werden muss, d.h. das Einschieben und Entnehmen bei einer einen möglichst geringen Verschleiß verursachenden Krafteinwirkung der Greiferarme auf die Behälter erfolgt, was grundsätzlich eine Begrenzung der Halte- oder Klemmkraft der Greifer bedeutet.

Aufgabe der Erfindung ist es, eine Greiferanordnung aufzuzeigen, die einen verbesserten Halt der Behälter an dem jeweiligen Greifer gewährleistet, vorzugsweise aber unter Beibehaltung einer in der Praxis bereits bewährten konstruktiven Ausbildung des jeweiligen Greifers. Zur Lösung dieser Aufgabe ist eine Greiferanordnung entsprechend dem Patentanspruch 1 ausgebildet. Ein Behältertransportelement ist Gegenstand des Patentanspruchs 12.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Der Kern der Erfindung besteht darin, dass ein Verschluss- oder Verriegelungselement gesteuert zwischen einer Schließlage (der oder die Greiferarme in Sperrposition) und Öffnungs- oder Freigabeposition (der oder die Greiferarme sind zum Öffnen freigebende) linear und in radialer Richtung verschoben werden kann. Dazu ist das Verriegelungselement bewegbar gelagert und kann hin und her, d.h. radial nach außen oder nach innen, bewegt werden. Dabei weist das Verschluss- oder Sperrelement wenigstens eine Sperrfläche auf, mit welcher oder mit welchen in der den Greifer sperrenden Stellung, die Steuerfläche eines oder beider Greiferarme arretiert werden.

Die Erfindung wird im Folgenden anhand der Figuren an einem Ausführungsbeispiel näher erläutert. Es zeigen:
- Fig. 1 und 2: jeweils in vereinfachter Darstellung und in Draufsicht eine Greiferanordnung mit drei Greifern in zwei unterschiedlichen Betriebszuständen der Greifer;

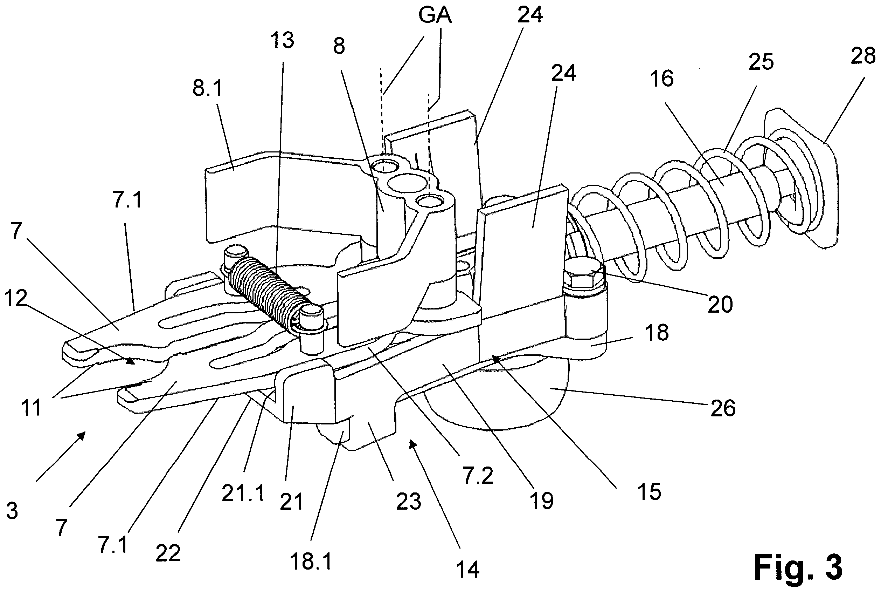

- Fig. 3: in perspektivischer Einzeldarstellung einen der Greifer der Greiferanordnung der Figuren 1 und 2, in seiner gegenüber den Figuren 1 und 2 gewendeten Einbaulage;

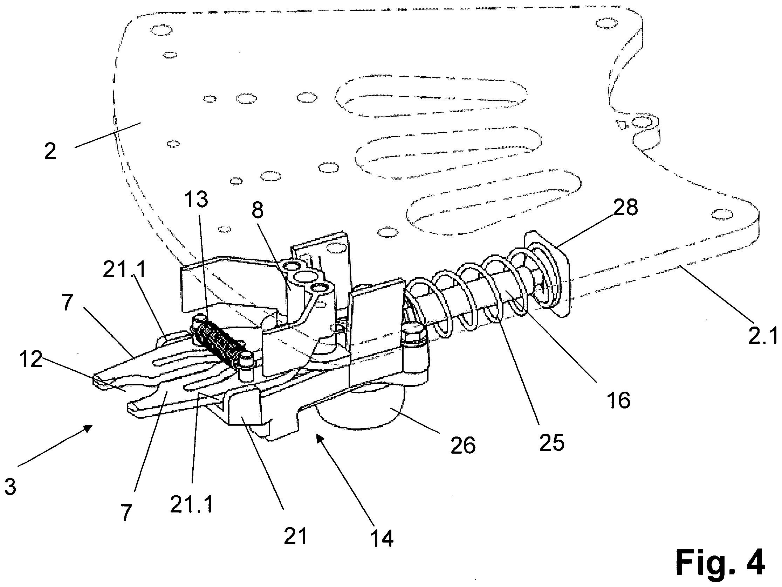

- Fig. 4: einen der Greifer der Greiferanordnung der Figuren 1 und 2 in seiner Einbaulage zusammen mit einem Trag- oder Montageelement der Greiferanordnung der Figur 1;

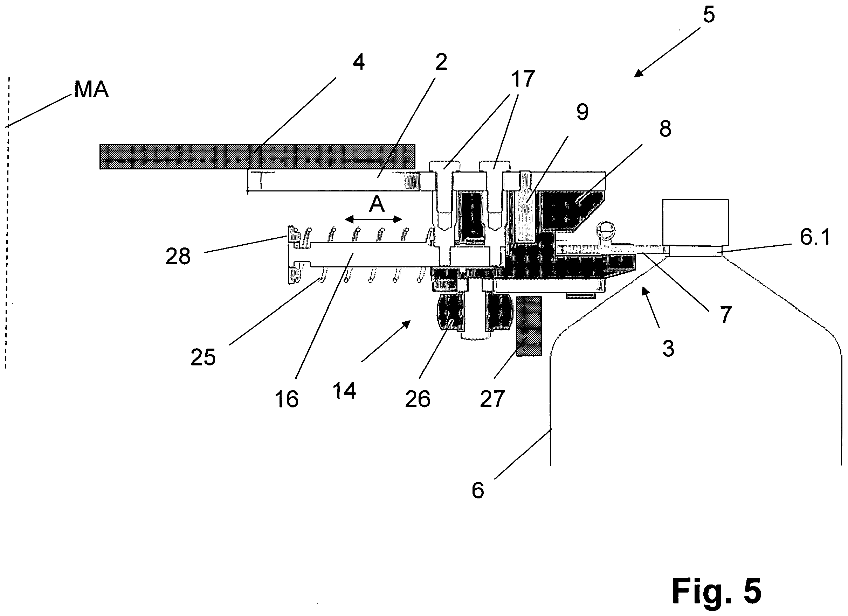

- Fig. 5: in vereinfachter Darstellung und im Teilschnitt einen der Greifer der Greiferanordnung zusammen mit einem an dem Greifer gehaltenen Behälter.

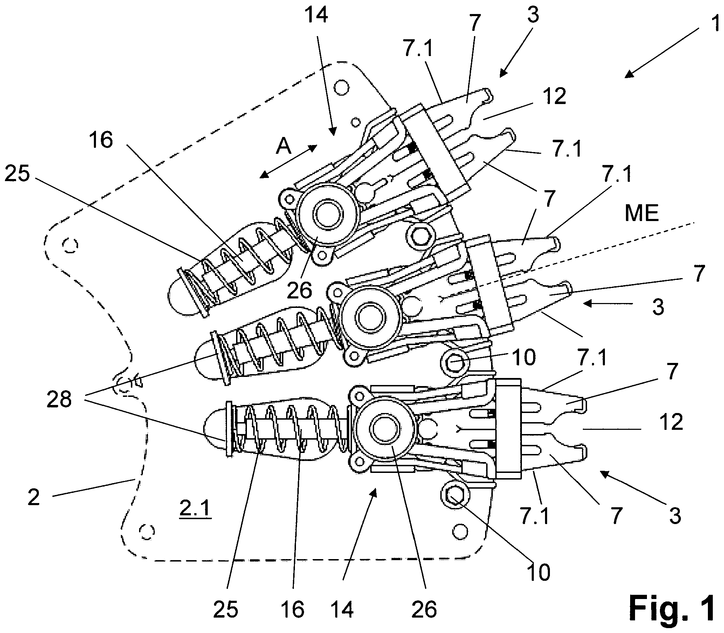

Figur 1 zeigt eine Greiferanordnung, die bei der dargestellten Ausführungsform aus einem Trag- und/oder Montageelement in Form einer Trag- und/oder Montageplatte 2 sowie aus einer Gruppe von drei zangenartigen passiven Greifern 3 besteht. Im Verwendungsfall bzw. im montierten Zustand ist die Greiferanordnung 1 zusammen mit einer Vielzahl weiterer Greiferanordnungen am Umfang eines umlaufenden Transportelementes, beispielsweise am Umfang eines um eine vertikale Maschinenachse MA umlaufend antreibbaren stern- oder rotorartigen Transportelementes 4 einer Behälterbehandlungsvorrichtung 5 für Flaschen oder dergleichen Behälter 6, z.B. am Rotor einer Behälterfüllmaschine, einer Behälterreinigungsmaschine usw. oder an einem Transportstern für die Behälter 6 vorgesehen. Letztere sind bei der dargestellten Ausführungsform Flaschen, vorzugsweise PET-Flaschen.

Jeder Greifer 3 besteht bei der dargestellten Ausführungsform aus zwei Greiferelementen oder Greiferarmen 7, die jeweils aus Flachmaterial, z.B. aus einem korrosionsbeständigen Stahlblech durch Ausschneiden hergestellt sind. Die beiden Greiferarme 7 jedes Greifers 3 sind an einem Ende mittels eines Gelenkbolzens um Greiferelementachsen GA an einem Lagerelement 8 schwenkbar gelagert. Im montierten Zustand sind die beiden Greiferachsen GA jedes Greifers 3 in Umfangsrichtung des Rotors 4 gegeneinander versetzt und in demselben oder im Wesentlichen im demselben radialen Abstand von der Maschinenachse parallel zu dieser angeordnet. Weiterhin sind die Achsen GA senkrecht zu den Oberflächenseiten der flachen Greiferelemente 7 sowie auch senkrecht zu den Oberflächenseiten der Trag- und/oder Montageplatte 2 orientiert.

Sämtliche Greiferarme 7 besitzen die selbe Formgebung, wobei an jedem Greifer 3 ein Greiferarm 7 gegenüber dem anderen Greiferarm 7 gewendet montiert ist, sodass die beiden Greiferarme 7 jedes Greifers 3 hinsichtlich ihrer Formgebung und Lage, insbesondere auch hinsichtlich der Lage der Achsen GA spiegelsymmetrisch zu einer parallel zu den Achsen GA und senkrecht zu den Oberflächenseiten der Trag- und/oder Montageplatte 2 orientierten Mittel- oder Symmetrieebene ME ausgebildet sind, die im Verwendungsfall, d.h. im am Transportelement 4 montierten Zustand der Greiferanordnung 1 radial oder im Wesentlichen radial zur Maschinenachse MA orientiert ist.

Das Lagerelement 8 ist mittels eines Lagerbolzens 9, der mit seiner Achse senkrecht zu den Oberflächenseiten der Trag- und/oder Montageplatte 2 orientiert ist und über die eine Oberflächenseite 2.1 vorsteht, an der Trag- und/oder Montageplatte 2 gelagert, und zwar derart, dass die Achse des Lagerbolzens 9 in der Mittelebene ME liegt.

Das Lagerelement 8 ist weiterhin mit zwei wegstehenden, vorzugsweise elastischen Flügeln 8.1 ausgebildet, die mit ihren einander abgewandten Außenseiten jeweils gegen einen Bolzen 10 anliegen, der über diejenige Oberflächenseite der Trag- und/oder Montageplatte 2 vorsteht, an der (Oberflächenseite) auch die drei Greifer 3 vorgesehen sind. Die Bolzen 10 besitzen denselben radialen Abstand von der Maschinenachse MA und sind jeweils in gleichen Winkelabständen um die Maschinenachse MA versetzt vorgesehen. Die Bolzen 10 besitzen einen größeren radialen Abstand von der Maschinenachse MA als die Lagerbolzen 9, sodass sich durch die gegen die Bolzen 10 anliegenden Flügel 8.1 und die Lagerbolzen 9 eine eindeutige Orientierung der Greifer 3 auch in Bezug auf die Maschinenachse MA ergibt. Die beiden Greiferarme 7 sind mit ihren Oberflächenseiten parallel und in denselben Abstand von der Oberflächenseite 2.1 der Trag- und/oder Montageplatte 2 angeordnet.

An ihren den Achsen GA entfernt liegenden und bezogen auf die Maschinenachse MA radial äußeren Enden sind die Greiferarme 7 mit Ausnehmungen 11 versehen, die sich zu einer den jeweiligen Behälter 2 zangenartig greifenden Behälteraufnahme 12 ergänzen. Bei der dargestellten Ausführungsform sind die Greifer 3 bzw. deren Greiferarme 7 für ein Halten der Behälter 6 an einem Behälterhals 6.1 unterhalb der Behältermündung ausgebildet, und zwar für eine Verwendung der Greiferanordnung 1 bei Behältern 6 mit erheblich unterschiedlichem Behälterhalsdurchmesser, beispielsweise mit einem Behälterhalsdurchmesser im Bereich zwischen 25mm - 38mm.

Zum Halten bzw. Greifen des jeweiligen Behälters 6 sind die beiden Greiferarme 7 jedes Greifer 3 durch eine Zugfeder 13, die unmittelbar zwischen den Greiferarmen 7 wirkt, in einen geschlossenen, den jeweiligen Behälter 6 klemmend greifenden oder haltenden Zustand (geschlossener Zustand) vorgespannt. Der jeweilige Behälter 6 kann mit seinem Behälterhals 6.1 unter federndem Auseinanderbewegen der Greiferarme 6 seitlich bzw. radial in die betreffende Aufnahme 12 eingeschoben bzw. aus dieser Aufnahme wieder entnommen werden. Der am Greifer 3 gehaltenen Behälter 6 wird an seinem Behälterhals 6.1 von den Greiferarmen 7 auf einem Umfangsbereich größer 180° umschlossen (Umschlingung).

Eine Besonderheit der Greiferanordnung 1 besteht darin, dass jeder Greifer 3 ein Verschluss- oder Sperrelement 14 aufweist, das bei der dargestellten Ausführungsform als Sperrschieber ausgebildet ist und mit dem stufenlos und unabhängig von dem Behälterhalsdurchmesser in dem einen Behälter 6 haltenden Zustand des jeweiligen Greifers 3 eine zusätzliche Arretierung oder Sperrung seiner Greiferarme 7 möglich und damit ein verbesserter Hält der Behälter 6 an den Greifern 3 gewährleistet ist, insbesondere auch an solchen Transportelementen 4, beispielsweise Rotoren oder Transportsternen, an denen während des Transports zusätzlich ein Wenden der Behälter 6 erfolgt. Wobei hier insbesondere auch die Eignung für den Transport von gefüllten PET-Flaschen als Vorteil zu nennen ist.

Weiterhin können die Greifer 3 bzw. die Greiferanordnung 1 sehr vorteilhaft für eine Transportstrecke, besehend aus oder umfassend unterschiedlichen Transportelemente, insbesondere Transportsterne, wie:
- Greiferanordnung 1 mit Sperre, abwechselnd mit rein passiv wirkenden Greifern, ohne Überleitkurven, zum Ausschleusen, bzw. Überleiten der Behälter,
- Anwendungen mit besonders hoher Winkelgeschwindigkeit und hieraus resultierenden Fliehkräften (Hochgeschwindigkeitsanlagen) oder
- Einsatz für Transportsterne, welche Behälter aus benachbarten Behandlungsmaschinen, bspw. Füller, Etikettierer oder Streck-Blasmaschinen, übernehmen.

Nicht dargestellt, aber analog anzuwenden ist die Sperrvorrichtung für Greifer, bei welchen nur ein Greifarm beweglich gelagert ist und der andere starr ausgeformt ist.

Jedes Verschluss- oder Sperrelement 14 besteht im Wesentlichen aus einem Sperrschieberschlitten 15, der vorzugsweise als Formteil aus Kunststoff gefertigt ist und an einer, bei der dargestellten Ausführungsform von einer Führungsstange 16 gebildeten Führung verschiebbar geführt ist (Doppelpfeil A). Die Führungsstange 16 ist mit ihrer Achse parallel zu der Oberflächenseiten 2.1 der Trag- und Montageplatte 2 so orientiert, dass diese Achse in der Ebene ME oder etwa in der Ebene ME liegt. Die Führungsstange 16 ist weiterhin so angeordnet, dass sie mit einem ersten Ende dem Lagerbolzen 9 näherliegt als mit einem zweiten Ende, welches in Bezug auf die Achse des Lagerbolzens 9 dem die Aufnahme 12 bildenden Ende der Greiferarme 7 diametral gegenüberliegt. Im montierten Zustand der Greiferanordnung 1 ist das zweite Ende der Führungsstange 16 also der Maschinenachse MA näher als das erste Ende der Führungsstange 16. Bei der dargestellten Ausführungsform ist die Führungsstange 16 an ihrem ersten Ende mit zwei Befestigungsbolzen 17 an der Trag- und/oder Montageplatte 2 gehalten.

Die beiden Greiferarme 7 jedes Greifers 3 sind an ihren einander abgewandten Außenseiten so geformt, dass der Abstand, den die Außenseiten der beiden Greiferarme 7 in einer Achsrichtung senkrecht zur Mittelachse ME voneinander aufweisen, insbesondere auch bei einem am Greifer 3 gehaltenen Behälter 6 ausgehend von dem freien Ende Greiferarme 7 in einem Abschnitt 7.1 zunächst zunimmt und dann in einem weiteren Abschnitt, der Steuerfläche 7.2, wieder abnimmt.

Insbesondere sind die Winkel der Außengeometrie sind so gewählt, dass sich mit aufgenommenem Behälter 6, eine leichte Verbreiterung (radial nach außen) ergibt, so dass die Sperrfunktion ausgelöst wird und wirken kann.

Am Sperrschieberschlitten 15 jedes Verschluss- oder Sperrelementes 14 ist eine Lagerplatte18 befestigt, welche bei der dargestellten Ausführungsform aus Metall gefertigt ist. Der Sperrschieberschlitten 15 selbst ist mit zwei Armen 19 ausgebildet, die beidseitig von der Mittelebene ME angeordnet und gegenüber den beiden Greiferarmen 7 in einer Achsrichtung senkrecht zu der Oberflächenseite 2.1 versetzt sind. Die Arme 19 sind an einem Ende mit Hilfe von Schraubbolzen 20 mit der Lagerplatte 18 verbunden, oder die Lagerplatte 18 ist, wie in diesem Ausführungsbeispiel gezeigt, mit dem Sperrschieberschlitten 15 verschraubt, mittels der Schraube 20 . Ausgehend von diesem Ende erstrecken sich die Arme 19 in Richtung auf die Greiferarme 7 und sind dort mit Vorsprüngen 21 ausgebildet, die an ihren einander zugewandten Innenseiten Sperrflächen 21.1 bilden, mit denen der Sperrschlitten 15 die beiden Greiferarme 7 des betreffenden Greifers 3 an den außenliegenden Seiten 7.1 bzw. an den dortigen Abschnitten, der Steuerfläche 7.2, reiterartig übergreift. Die Anordnung ist weiterhin so getroffen, dass die von den Abwinklungen 21 gebildeten, einander zugewandten Sperrflächen 21.1 in einer Achsrichtung senkrecht zur Mittelebene ME einen Abstand voneinander aufweisen, der zumindest geringfügig kleiner ist als der maximale Abstand der Abschnitte 7.2 bei einem am Greifer 3 gehaltenen Behälter 6 mit einem Behälterhalsdurchmesser, der dem kleinsten zu verarbeitenden Behälterhalsdurchmesser entspricht.

Im Bereich der Abwinklungen 21 sind die beiden Arme 19 durch einen senkrecht zur Mittelebene ME verlaufenden Steg 22 miteinander verbunden, wobei der Steg nicht zwingend erforderlich. Außerdem hintergreift im gezeigten Beispiel die Lagerplatte 18 mit jeweils einem Abschnitt 18.1 die Arme 19 an einem Vorsprung 23. An dem den Schrauben 20 benachbarten Ende sind die beiden Arme 19 jeweils mit einem radial wegstehenden flügelartigen Abschnitt 24 ausgebildet, der im montierten Zustand der Greiferanordnung 1 als zusätzliches, ein Verdrehen des Sperrschieberschlittens 15 vermeidendes Führungselement gegen die Oberflächenseite 2.1 anliegt. Vorgenannte Schrauben 20 können in analoger Weise als Bolzen ausgeführt sein.

Auf der Führungsstange 16 ist eine diese Führungsstange umschließende Druckfeder 25 angeordnet, die den Sperrschieberschlitten 15 in Richtung zum freien Ende der Greiferarme 7 in eine ein Auseinanderbewegen der Greiferarme 7 sperrende Stellung vorspannt.

Weiterhin ist am Verschluss- oder Sperrelement 14 bzw. an der Lagerplatte 18 eine Kurvenrolle 26 frei drehbar gelagert, und zwar um eine Achse, die im montierten Zustand der Greiferanordnung 1 senkrecht zu der Oberflächenseite 2.1 orientiert ist und die in der nachstehend noch näher beschriebenen Weise mit einer mit dem umlaufenden Transportelement 4 nicht mitbewegten bzw. ortsfesten Steuerkurve 27 zusammenwirkt.

Durch den Verlauf der Abschnitte 7.2 ist die stufenlose Sperrung möglich, d.h. eine Sperrung sowohl bei Behältern 6 mit kleinem Behälterhalsdurchmesser (bei durch die Druckfeder 25 weiter vor bewegtem Sperrschieberschlitten 15), als auch bei Behältern 6 mit großem Behälterhalsdurchmesser (bei weniger weit durch die Druckfeder 25 vorbewegtem Sperrschieberschlitten 15). Mit dem Sperrschieberschlitten 15 erfolgt dabei im Wesentlichen eine Sperrung des jeweiligen Greifers 3 gegen ein Auseinanderbewegen der Greiferarme 7 bzw. gegen eine Freigabe des betreffenden Behälters 6, während die Halte- oder Klemmkraft zum Halten des Behälters 6 im entsperrten Zustand durch die Zugfeder 13 erzeugt wird.

Im Verwendungsfall ist die Greiferanordnung 1 im gewendeten Zustand, d.h. mit der Oberflächenseite 2.1 der Trag- und/oder Montageplatte 2 nach unten weisend an der Unterseite des Transportelementes 5 befestigt.

Der besondere Vorteil dieser Vorrichtung besteht darin, dass sie unabhängig ist von dem Öffnungswinkel der Greifarme 7, da sie sich automatisch radial bis zur jeweiligen Endlage bewegt.

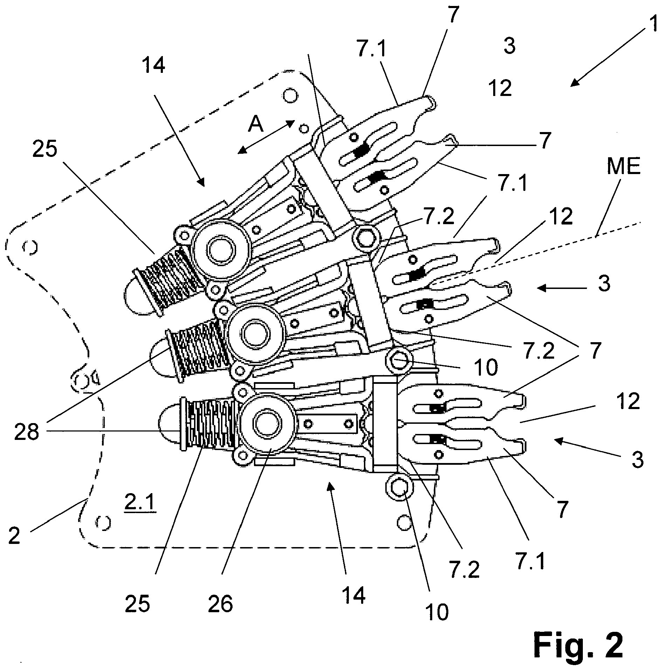

Dort, wo beim Umlauf des Transportelementes 5 eine Übergabe der Behälter 6 an die Greifer 3 oder ein Abnehmen der Behälter 6 von den Greifern 3 erfolgt, ist das jeweilige Verschluss- oder Sperrelement 14 bzw. dessen Sperrschieberschlitten 15 durch Auflaufen seiner Kurvenrolle 26 auf eine Steuerkurve 27 gegen die Wirkung der Druckfeder 25 in seine den Greifer 3 nicht sperrende Stellung bzw. in seine Freigabeposition zurückbewegt, in der die Abwinklungen 21 mit ihren Sperrflächen 21.1 die Greiferarme 7 freigeben. Die sperrende Stellung der Verschluss- oder Sperrelemente 14 (Sperrposition) ist in der Figur 1 und die nicht sperrende Stellung der Verschluss- oder Sperrelemente (Freigabeposition) in der Figur 2 wiedergegeben.

Bei einer Beschädigung oder Verschleiß kann das Verschluss- oder Sperrelement 14 problemlos und ohne großen Aufwand ausgetauscht werden, und zwar dadurch, dass das Gegenlager 28, gegen welches sich die jeweilige Druckfeder 25 mit ihrem dem Sperrschieberschlitten 15 entfernten Ende abstützt, entfernt und dann der Sperrschieberschlitten 15 und die Druckfeder 25 von der Führungsstange 16 abgenommen werden. Das Gegenlager 28 ist zur Vereinfachung des Montierens oder Demontierens bzw. des Austauschens des Sperrschieberschlittens 15 beispielsweise mit einer bajonettartigen Verriegelung an dem betreffenden Ende der Führungsstange 16 gehalten.

Unabhängig von der jeweiligen konkreten Ausführung im Detail lassen sich wesentliche Vorteile der erfindungsgemäßen Greiferanordnung 1, wie folgt zusammenfassen:
- Sehr vereinfachte kostengünstige Konstruktion bei hohen Halte- und Klemmkräften zum Halten der Behälter 6;
- Entkopplung des Halte- und Greifvorganges von der Sperrfunktion der Greifer 3 durch das jeweilige Verschluss- oder Sperrelement 14;
- Eignung für Behälter 6 mit sehr unterschiedlichem Behälterhalsdurchmesser;
- Vereinfachtes Auswechseln von defekten Verschluss- oder Sperrelementen 14;
- Offene und insbesondere auch gut zu reinigen Konstruktion;
- Geringe Steuerkräfte zum Bewegen des Verschluss- oder Sperrelementes 14 zwischen der sperrenden und nicht sperrenden Position, dadurch geringer Verschleiß und geringere Geräuschentwicklung.

Insbesondere ist mit der erfindungsgemäßen Greiferanordnung 1 ein sicherer Halt der Behälter 6 an den Greifern 3 gewährleistet, sowohl für leere Behälter 6, als auch für volle Behälter 6, beispielsweise in Form von Flaschen, wie z.B. PET-Flaschen oder auch Glasflaschen, wobei für die Greifer 3 eine in der Praxis bereits bewährte konstruktive Ausbildung verwendet werden kann.

Durch entsprechende Wahl der Federkraft der Zugfeder 13 ist es möglich, die Behälterübergabe an die Greifer 3 sowie auch die Behälterentnahme von den Greifern 3 weich, d.h. ohne hohe Ein- und Ausschubkräfte und mit geringem Verschleiß und geringer Geräuschentwicklung auszugestalten.

Die mit dem Verschluss- oder Sperrelement 14 erreichte Sperrwirkung ist selbsteinstellend über den gesamten Greifbereich der Greifer 3, sodass ohne jegliche Umbauten die Greiferanordnung 1 für sehr unterschiedliche Behälterhalsdurchmesser, beispielsweise für Behälterhalsdurchmesser im Bereich zwischen 25mm - 37 mm verwendbar ist.

Mit der Druckfeder 25 wird eine Vorspannung für das Verschluss- oder Sperrelement 14 erreicht, was auch zu einer Beseitigung des Spiels zwischen den Verschluss- oder Sperrelementen 14 und den Greiferarmen 7 führt.

Weiterhin können die Verschluss- oder Sperrelemente 14 auch zu einer gewissen Erhöhung der Halte- oder Klemmkraft der Greifer 3 beitragen. Die durch die Druckfeder 25 erzeugte zusätzliche Halte- oder Klemmkraft ist dabei dann über den gesamten Bereich der zu verarbeitenden Behälterdurchmesser im Wesentlichen konstant. Zwar nimmt die von der Druckfeder 25 erzeugte Federkraft mit dem Weg des Verschluss- oder Sperrelements 14 in Richtung zum freien Ende der Greiferarme 7 hin ab, gleichzeitig vergrößert sich aber der Hebelarm, mit dem die Sperrflächen 21.1 auf die Greiferarme einwirken.

Durch die spezielle Geometrie wirkt das Verschluss- oder Sperrelement 14 unter Berücksichtigung auch der Reibung zwischen den Sperrflächen 21.1 und den Greiferarmen 7 selbsthemmend, sodass ein unbeabsichtigtes oder unerwünschtes Öffnen der Greifer 7 bei an der Sperrposition befindlichem Sperrelement 17 nicht möglich ist.

Für Rinser, Füller, aber auch für die sichere Übergabe zwischen Transportsternen ist die Mittellage des Behälters 6 (auf Teilung) wichtig. Auch dies wird durch das jeweilige Verschluss- oder Sperrelement 14 sichergestellt, da der Sperrschieberschlitten 15 an der Führungsstange 16 exakt radial zu der Maschinenachse MA des umlaufenden Transportelementes 5 geführt und orientiert ist.

Der jeweilige Greifer 3 befindet sich dort, wo die Steuerkurve 27 nicht vorhanden ist, im gesperrten Zustand. Hierdurch sind einfache und kurze Steuerkurven 27 möglich, was zu einer kostengünstigen und leichter zu reinigenden Konstruktion einer Behälterbehandlungsmaschine oder eines Behältertransportelementes beiträgt.

Falls bei Überlastung der Sperrschieberschlitten 15 bricht, wird das gesamte Verschluss- oder Sperrelement 14 werkzeuglos ausgetauscht.

Mit der Greiferanordnung 1 kann ein kleiner Teilkreis von bis zu 720 mm mit kleiner Teilung 30 PI realisiert werden. Je nach Art und/oder Gewicht der Gehälter 6 ist die Geometrie, mit der der jeweilige Behälter 6 oder dessen Behälterhals 6.1 von dem Greifer 3 umgriffen wird entsprechend angepasst, unterschiedlich gewählt. So ist beispielsweise bei Behältern 6 in Form von PET-Flaschen eine große Umschlingung mit den Greifern 3 von Vorteil, wodurch ein an dem betreffenden Behälter 6 unterhalb der Behältermündung üblicherweise ausgebildeter Neck- oder Halsring dünner und/oder schmäler ausgestaltet werden kann, was der im Trend liegenden Behältergestaltung entspricht. Besonders wichtig ist aber eine möglichst große Umschlingung der Behälter 6 mit den Greifern 3 bei einer Verwendung der Greiferanordnung 1 an einem Transportelement oder Transportstern zwischen einer Füllmaschine und einer Verschließmaschine.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrundeliegende Erfindungsgedanke verlassen wird.

Voranstehend wurde davon ausgegangen, dass das Verschluss- oder Sperrelement 14 durch eine Druckfeder 25 in die Sperrposition vorgespannt ist und die Sperrflächen 21.1 hierfür mit den Abschnitten 7.2 zusammenwirken. Selbstverständlich ist es auch möglich, das Verschluss- oder Sperrelement 14 so auszuführen, dass dessen Sperrflächen 21.1 mit den Abschnitten 7.1 der Greiferarme 7 zusammenwirken, wobei dann die Bewegung des Verschluss- oder Sperrelementes 14 in seine sperrende Position in umgekehrter Richtung erfolgt, und zwar im Sinne einer Vergrößerung des Abstandes zwischen den Sperrflächen 21.1 und dem freien, die Aufnahme 12 bildenden Enden der Greiferarme 7. Anstelle der Druckfeder 25 ist dann beispielsweise eine Zugfeder vorgesehen.

### Bezugszeichenliste

- 1: Greiferanordnung
- 2: Trag- und Montageplatte
- 2.1: Oberflächenseite der Trag- und/oder Montageplatte
- 3: Greifer
- 4: Transportelemente
- 5: Behälterbehandlungsvorrichtung
- 6: Behälter
- 6.1: Behälterhals
- 7: Greiferarm
- 7.1, 7.2: Steuerfläche; Abschnitt der Greifarme
- 8: Lagerelement
- 8.1: Flügel
- 9: Lagerbolzen
- 10: Bolzen
- 11: Ausnehmung
- 12: Aufnahme
- 13: Zugfeder
- 14: Verschluss- oder Sperrelement
- 15: Sperrschieberschlitten
- 16: Führungsstange
- 17: Befestigungsbolzen
- 18: Lagerplatte
- 18.1: Abschnitt
- 19: Arm
- 20: Schraube/Bolzen
- 21: Abwinklung
- 21.1: Sperrfläche
- 22: Verbindungssteg
- 23: Vorsprung
- 24: flügelartiger Abschnitt
- 25: Druckfeder
- 26: Kurvenrolle
- 27: Steuerkurve
- 28: Gegenlager
- A: Bewegung des Verschluss- oder Sperrelementes 14
- GA: Greiferarmschwenkachse
- MA: Maschinenachse
- ME: Mittel- oder Symmetrieebene der Greifer 3

## Patentansprüche

1. Greiferanordnung mit wenigstens einem Greifer (3), der mit wenigstens zwei relativ zueinander bewegbaren und durch wenigstens eine Schließeinrichtung in eine Schließstellung vorgespannten Greiferarmen (7), die zum klemmenden Halten von Flaschen oder Behältern (6) an einem Behälterbereich (6.1) ausgebildet ist, wobei die Greiferarme (7) zum klemmenden Halten durch teilweises Umgreifen des jeweiligen Behälters (6) an dem Behälterbereich (6.1) ausgebildet sind,
wobei zusätzlich ein Verschlusselement (14) vorgesehen ist, welches gesteuert zwischen einer Sperrposition, in der das Verschlusselement (14) die Greiferarme (7) in ihrer Schließstellung und damit den geschlossenen Greifer (3) gegen ein Öffnen sperrt, und einer Freigabeposition in der das Verschlusselement (14) die Greiferarme (7) für ein Öffnen des Greifers (3) freigibt, linear in radialer Richtung hin und her bewegbar ist, wobei das Verschlusselement (14) wenigstens eine Sperrfläche (21.1) aufweist, mit der das Verschlusselement (14) zumindest in der den Greifer (3) sperrenden Stellung dessen Greiferarm (7) an dortigen Steuerflächen (7.2) hintergreift und wobei das Verschlusselement (14) durch wenigstens ein Federelement (25) in seine Sperrposition vorgespannt ist.

2. Greiferanordnung nach Anspruch 1, **dadurch gekennzeichnet, dass** zumindest bei am Greifer (3) gehaltenem Behälter (6) die Steuerfläche (7.2) und/oder die wenigstens eine mit der Steuerfläche (7.2) eines Greiferarms (7) zusammenwirkende Sperrfläche (21.1) relativ zu einer Bewegungsachse (A) geneigt sind, in der das Verschlusselement (14) zwischen der Sperrposition und der Freigabeposition bewegt wird, und zwar unter Ausbildung eines spitzen Neigungswinkels kleiner als 45°, vorzugsweise kleiner als 20°.

3. Greiferanordnung nach Anspruch 2, **dadurch gekennzeichnet, dass** sich bei Ausbildung der geneigten Steuerfläche (7.2) an wenigstens einem Greiferarm (7) sich der Neigungswinkel zwischen der Steuerfläche (7.2) und der Bewegungsachse (A) des Verschlusselementes (14) in Richtung eines den Greifer (3) entsperrenden Bewegungshubes des Verschlussementes (14) öffnet.

4. Greiferanordnung nach einem der vorhergehenden Ansprüche, **dadurch gekennzeichnet, dass** das Verschlusselement (14) wenigstens zwei Sperrflächen (21.1) aufweist und mit diesen Sperrflächen (21.1) zumindest in der den Greifer (3) sperrenden Stellung dessen Greiferarme (7) an den dortigen Steuerflächen (7.2) reiterartig übergreift.

5. Greiferanordnung nach einem der vorhergehenden Ansprüche, **dadurch gekennzeichnet, dass** die Steuerflächen (7.2) beidseitig von einer Greiferebene (MA) angeordnet und beispielsweise an außenliegenden Rändern der Greiferarme (7) ausgebildet sind, und dass das Verschlusselement (14) in einer in der Greiferebene (ME) angeordneten Achsrichtung zwischen der Sperrposition und der Freigabeposition bewegbar ist.

6. Greiferanordnung nach Anspruch 5, **dadurch gekennzeichnet, dass** die Greiferebene eine Mittel- oder Symmetrieebene (ME) ist, zu der der Greifer (3) hinsichtlich der Greiferarme (7) spiegelsymmetrisch ausgebildet ist.

7. Greiferanordnung nach einem der vorhergehenden Ansprüche, **dadurch gekennzeichnet, dass** das Verschlusselement (14) ein Sperrschieber (14) ist, der an einer Führung (16) zwischen der Sperrposition und der Freigabeposition bewegbar ist.

8. Greiferanordnung nach einem der vorhergehenden Ansprüche, **gekennzeichnet durch** eine Steuereinrichtung zum gesteuerten Bewegen des Verschluss- oder Sperrelementes (14) zwischen der Sperrposition und der Freigabeposition.

9. Greiferanordnung nach einem der vorhergehenden Ansprüche, **dadurch gekennzeichnet, dass** das Federelement (25) als Druckfeder ausgebildet ist.

10. Greiferanordnung nach Anspruch 8 oder 9, **dadurch gekennzeichnet, dass** die Steuereinrichtung wenigstens eine am Verschlusselement (14) vorgesehene und mit einer Steuerkurve (27) zusammenwirkenden Kurvenrolle (26) aufweist.

11. Greiferanordnung nach einem der vorhergehenden Ansprüche, **gekennzeichnet durch** ein vorzugsweise plattenförmiges Trag- und/oder Montageelement (2), an welchem wenigstens ein Greifer (3) mit zugehörigem Verschlusselement (14), vorzugsweise wenigstens zwei Greifer (3) mit jeweils einem eigenständigen Verschluss- oder Sperrelement (14) vorgesehen sind.

12. Umlaufend antreibbares Behältertransportelement mit einer Vielzahl von Greifern (3) zum Halten von Flaschen oder dergleichen Behältern (6), **dadurch gekennzeichnet, dass** die Greifer (3) Bestandteil wenigstens einer Greiferanordnung (1) sind, die nach einem der vorhergehenden Ansprüche ausgebildet ist.

## Claims

1. Gripper arrangement with at least one gripper (3), which is configured with at least two gripper arms (7) which can be moved in relation to each other and which are tensioned in a closed position by at least one closing spring device, for clamping bottles or containers (6) in a container area (6.1), wherein the gripper arms (7) are configured for clamping by partially gripping around the respective container (6) at the container area (6.1),
wherein a closure element (14) is additionally provided, which can be moved in linear fashion in a radial direction in a controlled manner between a blocking position, in which the closure element (14) blocks the gripper arms (7) in their closed position, and therefore blocks the closed gripper (3) against opening, and a release position, in which the closure element (14) releases the gripper arms (7) for opening the gripper (3), wherein the closure element (14) comprises at least one blocking surface (21.1), with which the closure element (14), at least in the position blocking the gripper (3), engages behind the gripper arm (7) at the control surfaces (7.2) located there, and wherein the closure element (14) can be tensioned by at least one spring element (25) into its blocking position.

2. Gripper arrangement according to claim 1, **characterised in that**, with at least one container (6) held at the gripper (3), the control surfaces (7.2) and/or the at least one blocking surface (21.1) interacting with the control surface (7.2) of a gripper arm (7) are inclined relative to a movement axis (A), in which the closure element (14) is moved between the blocking position and the release position, and specifically with the formation of an acute inclination angle of less than 45°, and preferably less than 20°.

3. Gripper arrangement according to claim 2, **characterised in that**, with the formation of the inclined control surface (7.2) at at least one gripper arm (7), the inclination angle between the control surface (7.2) and the movement axis (A) of the closure element (14) opens in the direction of a movement lift of the closure element (14), unblocking the gripper (3).

4. Gripper arrangement according to any one of the preceding claims, **characterised in that** the closure element (14) comprises at least two blocking surfaces (21.1), and with these blocking surfaces (21.1), at least in the position blocking the gripper (3), engages in rider fashion over its gripper arms (7) at the control surfaces (7.2) located there.

5. Gripper arrangement according to any one of the preceding claims, **characterised in that** the control surfaces (7.2) are arranged on both sides of a gripping plane (MA), and are formed, for example, at the outlying edges of the gripper arms (7), and that the closure element (14) can be moved in an axial direction arranged in the gripping plane (ME) between the blocking position and the release position.

6. Gripper arrangement according to claim 5, **characterised in that** the gripping plane is a middle plane or symmetry plane (ME), in relation to which the gripper (3) is configured mirror symmetrically in respect of the gripper arms (7).

7. Gripper arrangement according to any one of the preceding claims, **characterised in that** the closure element (14) is a blocking slide element (14), which can be moved on a guide element (16) between the blocking position and the release position.

8. Gripper arrangement according to any one of the preceding claims, **characterised by** a control device for the controlled movement of the closure element or blocking element (14) between the blocking position and the release position.

9. Gripper arrangement according to any one of the preceding claims, **characterised in that** the spring element (25) is configured as a pressure spring.

10. Gripper arrangement according to claim 8 or 9, **characterised in that** the control device comprises at least one curve roller (26) provided at the closure element (14) and interacting with a control curve (27).

11. Gripper arrangement according to any one of the preceding claims, **characterised by** a carrier element and/or mounting element (2), preferably in the form of a plate, at which one gripper (3) is provided, with its related closure element (14), or preferably at least two grippers (3) are provided, in each case with an independent closure element or blocking element (14).

12. Container transport element, which can be driven in a circulating manner, with a plurality of grippers (3) for holding bottles or similar containers (6), **characterised in that** the grippers (3) are component parts of at least one gripper arrangement (1) which is configured in accordance with any one of the preceding claims.

## Revendications

1. Dispositif preneur avec au moins une pince (3) qui comprend au moins deux bras de préhension (7) mobiles l'un par rapport à l'autre et précontraints dans une position de fermeture par au moins un dispositif de fermeture qui est réalisé pour retenir par serrage des bouteilles ou contenants (6) sur une zone de contenant (6.1), dans lequel les bras de préhension (7) sont réalisés pour retenir par serrage en enserrant partiellement le contenant respectif (6) sur la zone de contenant (6.1),
dans lequel un élément de fermeture (14) est en outre prévu, lequel peut être déplacé de manière commandée entre une position de blocage dans laquelle l'élément de fermeture (14) bloque les bras de préhension (7) dans leur position de fermeture et ainsi la pince (3) fermée contre une ouverture, et une position de libération dans laquelle l'élément de fermeture (14) libère les bras de préhension (7) pour une ouverture de la pince (3), linéairement dans le sens radial alternativement, dans lequel l'élément de fermeture (14) présente au moins une surface de blocage (21.1) avec laquelle l'élément de fermeture (14) vient en prise derrière le bras de préhension (7) de la pince (3) sur des surfaces de commande (7.2) qui s'y trouvent au moins dans la position bloquant ladite pince (3) et dans lequel l'élément de fermeture (14) est précontraint par au moins un élément de ressort (25) dans sa position de blocage.

2. Dispositif preneur selon la revendication 1, **caractérisé en ce qu'**au moins en cas de contenant (6) retenu sur la pince (3) la surface de commande (7.2) et/ou l'au moins une surface de blocage (21.1) coagissant avec la surface de commande (7.2) d'un bras de préhension (7) est inclinée par rapport à un axe de mouvement (A), dans lequel l'élément de fermeture (14) est déplacé entre la position de blocage et la position de libération, et ce en réalisant un angle d'inclinaison aigu inférieur à 45°, de préférence inférieur à 20°.

3. Dispositif preneur selon la revendication 2, **caractérisé en ce qu'**en cas de réalisation de la surface de commande (7.2) inclinée sur au moins un bras de préhension (7) l'angle d'inclinaison entre la surface de commande (7.2) et l'axe de mouvement (A) de l'élément de fermeture (14) s'ouvre en direction d'une course de mouvement débloquant la pince (3) de l'élément de fermeture (14).

4. Dispositif preneur selon l'une quelconque des revendications précédentes, **caractérisé en ce que** l'élément de fermeture (14) présente au moins deux surfaces de blocage (21.1) et avec ces surfaces de blocage (21.1) au moins dans la position bloquant la pince (3) recouvre ses bras de préhension (7) sur les surfaces de commande (7.2) qui s'y trouvent comme un cavalier.

5. Dispositif preneur selon l'une quelconque des revendications précédentes, **caractérisé en ce que** les surfaces de commande (7.2) sont disposées de part et d'autre d'un plan de pince (MA) et par exemple sont réalisées sur des bords extérieurs des bras de préhension (7), et **en ce que** l'élément de fermeture (14) est mobile dans un sens axial disposé dans le plan de pince (ME) entre la position de blocage et la position de libération.

6. Dispositif preneur selon la revendication 5, **caractérisé en ce que** le plan de pince est un plan médian ou symétrique (ME) par rapport auquel la pince (3) est réalisée de manière symétrique en ce qui concerne les bras de préhension (7).

7. Dispositif preneur selon l'une quelconque des revendications précédentes, **caractérisé en ce que** l'élément de fermeture (14) est un coulisseau de blocage (14) qui est mobile sur un guidage (16) entre la position de blocage et la position de libération.

8. Dispositif preneur selon l'une quelconque des revendications précédentes, **caractérisé par** un dispositif de commande pour le mouvement commandé de l'élément de fermeture ou de blocage (14) entre la position de blocage et la position de libération.

9. Dispositif preneur selon l'une quelconque des revendications précédentes, **caractérisé en ce que** l'élément de ressort (25) est réalisé comme un ressort de compression.

10. Dispositif preneur selon la revendication 8 ou 9, **caractérisé en ce que** le dispositif de commande présente au moins un galet à came (26) prévu sur l'élément de fermeture (14) et coagissant avec une came de commande (27).

11. Dispositif preneur selon l'une quelconque des revendications précédentes, **caractérisé par** un élément de support et/ou de montage (2) de préférence en forme de plaque sur lequel est prévue au moins une pince (3) avec un élément de fermeture (14) afférent, de préférence au moins deux pinces (3) avec respectivement un élément de fermeture ou de blocage (14) autonome.

12. Elément de transport de contenant entraînable en rotation avec une pluralité de pinces (3) pour retenir des bouteilles ou contenants similaires (6), **caractérisé en ce que** les pinces (3) font partie d'au moins un dispositif preneur (1) qui est réalisé selon l'une quelconque des revendications précédentes.
